# EUROPEAN PATENT APPLICATION

(11) **EP 4 697 474 A1**
(43) Date of publication of application: **18.02.2026**
(21) Application number: 24788093.3
(22) Date of filing: 10.04.2024
(51) Int. Cl.: H01M 50/296, H01M 50/298, H01M 50/249, H01M 50/244

(54) **BATTERY PACK STRUCTURE**

(30) Priority: 10.04.2023 CN 202310368441
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2024/086982
(87) International publication number: WO 2024/212991

(57) **Abstract**

Disclosed by the present disclosure is a battery pack structure, including a housing, and a battery module and a wiring harness assembly which are disposed in the housing, in which the wiring harness assembly includes a flexible wiring harness, a flat rigid wiring harness, at least one high-voltage protective sleeve, at least one low-voltage protective sleeve, and a mounting bracket for mounting the high-voltage protective sleeve and the low-voltage protective sleeve to the housing. The battery pack structure of the present disclosure can fix the high-voltage protective sleeve and the low-voltage protective sleeve through the mounting bracket, thereby achieving a physical isolation between the high-voltage wiring harness and the low-voltage wiring harness. Meanwhile, the wiring harness assembly of the present disclosure includes a flexible wiring harness connected to the low-voltage protective sleeve, and a flat rigid wiring harness connected to the high-voltage protective sleeve. The arrangement of the flat rigid wiring harness achieves the transition of the high-voltage wiring harness from an external circular shape to a flat shape, solves the problem that the high-voltage wiring harness is difficult to be bent and arranged inside the battery pack due to the excessive diameter, and furthermore, the arrangement of the flat rigid wiring harness can effectively improve the volumetric energy density of the battery pack.

## Description

### RELATED APPLICATION

The present disclosure claims the priority of the Chinese patent application No. 202310368441.6 filed on April 10, 2023, the disclosure of which is incorporated herein by reference.

### TECHNICAL FIELD

The present disclosure relates to the technical field of new energy vehicles, and particularly to a battery pack structure.

### BACKGROUND

The internal structure of a battery pack of a new energy vehicle is compact, and the mounting space is limited. Due to the large diameter of high-voltage wiring harness, the bending radius achievable by the wiring harness at a transition position is limited, and physical isolation is required between the high-voltage wiring harness and a low-voltage wiring harness to avoid the influence of the high-voltage wiring harness on the signal of the low-voltage wiring harness. With the increasing demands for the volume energy density of the battery packs in the field of new energy vehicle, how to rationally arrange the high-voltage wiring harness and the low-voltage wiring harness in the limited space of the battery pack has always been a challenging problem in the art.

### SUMMARY

In view of this, an objective of the present disclosure is to provide a battery pack structure to solve the technical problem mentioned in the Background.

In order to achieve the above objective, the present disclosure adopts the following technical solution: a battery pack structure, including a housing, and a battery module and a wiring harness assembly which are disposed in the housing, wherein the wiring harness assembly includes a flexible wiring harness, a flat rigid wiring harness, at least one high-voltage protective sleeve, at least one low-voltage protective sleeve, and a mounting bracket for mounting the high-voltage protective sleeve and the low-voltage protective sleeve to the housing; two ends of the rigid wiring harness are electrically connected to the high-voltage protective sleeve and the battery module respectively, and two ends of the flexible wiring harness are electrically connected to the low-voltage protective sleeve and the battery module respectively.

In an optional embodiment, the rigid wiring harness at least includes a flat rigid section.

In an optional embodiment, the rigid wiring harness includes a flat rigid section and at least one flexible section electrically connected to the rigid section; and
when a plurality of the flexible sections are provided, the flexible sections are arranged independently of each other.

In an optional embodiment, a plurality of the flexible sections are sequentially arranged along a width and/or thickness direction of the rigid section.

In another embodiment, a plurality of the flexible sections are sequentially arranged along a length and/or thickness direction of the rigid section.

In an optional embodiment, the rigid section is a flat aluminum busbar, the flexible section includes flexible copper wires sheathed with an insulating sleeve, and different flexible sections are insulated from each other.

In an optional embodiment, the rigid section and the flexible section are connected by welding, crimping, or bolting with a bolt structure.

In an optional embodiment, the rigid section and the flexible section are welded by friction stir welding or ultrasonic welding.

In an optional embodiment, the rigid section is provided with at least one fuse groove along a width direction at an end electrically connected to the flexible section, a fuse strip is embedded in the fuse groove, both the rigid section and the fuse strip are made of metal materials, and a melting point of the fuse strip is lower than that of the rigid section.

In an optional embodiment, the fuse strip is cast in the fuse groove, and a ratio of a depth of the fuse groove to a thickness of the rigid section is not greater than 1/2.

In an optional embodiment, the top of the fuse strip is disposed to protrude from an end surface of the rigid section.

In an optional embodiment, the flexible section is provided with at least one telescoping section, which is formed by bending the flexible section along a first direction perpendicular to a plane where the flexible section is located.

In an optional embodiment, the telescoping section is overall serrated or wavy in form.

In an optional embodiment, the mounting bracket includes a plate-shaped bracket body and at least one leg that is fixedly connected to the bracket body to allow the bracket body to be suspended; the high-voltage protective sleeve and the low-voltage protective sleeve are mounted on the bracket body; and terminals of the high-voltage protective sleeve and the low-voltage protective sleeve are located on a side where the leg is located, and connected to the rigid wiring harness and the flexible wiring harness, respectively.

In an optional embodiment, there are two of the legs, which are formed by bending two ends of the bracket body in an extending direction toward a same direction.

In an optional embodiment, an end surface of the bracket body on a side away from the leg is provided with a mounting platform, which is disposed to protrude from the end surface of the bracket body; and the mounting platform is provided with a first mounting hole for mounting the high-voltage protective sleeve and a second mounting hole for mounting the low-voltage protective sleeve at intervals.

In an optional embodiment, a sealing gasket is disposed around the mounting platform; and
the sealing gasket, the bracket body and the housing are correspondingly provided with first bolt holes.

In an optional embodiment, a top surface of the sealing gasket is not higher than an upper end surface of the mounting platform.

In an optional embodiment, the housing includes a lower housing for accommodating the battery module and a cover plate covering the top of the lower housing; and the cover plate is provided with a guide hole for the mounting platform to extend through.

In an optional embodiment, a base bracket for supporting the wiring harness assembly is disposed inside the housing; and the leg and the base bracket are correspondingly provided with second bolt holes.

Compared with the prior art, the present disclosure realizes the following advantageous effects: the battery pack structure of the present disclosure can fix the high-voltage protective sleeve and the low-voltage protective sleeve through the mounting bracket, thereby realizing a physical isolation between the high-voltage wiring harness and the low-voltage wiring harness. Meanwhile, the wiring harness assembly of the present disclosure includes a flexible wiring harness connected to the low-voltage protective sleeve, and a flat rigid wiring harness connected to the high-voltage protective sleeve. The arrangement of the flat rigid wiring harness achieves the transition of the high-voltage wiring harness from an external circular shape to a flat shape, solves the problem that the high-voltage wiring harness is difficult to be bent and arranged inside the battery pack due to the excessive diameter, and furthermore, the arrangement of the flat rigid wiring harness can effectively improve the volumetric energy density of the battery pack.

### BRIEF DESCRIPTION OF THE DRAWINGS

The drawings, which are incorporated in and constitute a part of the specification, illustrate the embodiments of the present disclosure, and together with the description, serve to explain the principles of the present disclosure.
FIG. 1 illustrates a schematic diagram of a structure of a battery pack structure according to the present disclosure;
FIG. 2 illustrates a schematic diagram of an internal structure of a battery pack structure illustrated in FIG. 1;
FIG. 3 illustrates a schematic diagram of a connection relationship between a high-voltage protective sleeve and a rigid wiring harness;
FIG. 4 illustrates a schematic diagram of a distribution of fuse strip on a rigid wiring harness;
FIG. 5 illustrates a schematic diagram of a distribution of two flexible sections sequentially arranged along a width direction of a rigid section in an embodiment;
FIG. 6 illustrates a schematic diagram of a distribution of a high-voltage protective sleeve and a low-voltage protective sleeve on a mounting bracket;
FIG. 7 illustrates a schematic diagram of a structure of a mounting bracket;
FIG. 8 illustrates a top view of FIG. 6;
FIG. 9 illustrates a partially enlarged view of a battery pack structure illustrated in FIG. 1;
FIG. 10 illustrates a cross-sectional view taken along a direction A-A in FIG. 9;
FIG. 11 illustrates a schematic diagram of assembling of a wiring harness assembly and a base bracket;
FIG. 12 illustrates a schematic diagram of a distribution of two flexible sections sequentially arranged along a length direction of a rigid section in an embodiment.

### Reference numerals:

1: housing; 11: lower housing; 12: cover plate; 13: guide hole; 14: base bracket; 2: battery module;
3: wiring harness assembly;
10: high-voltage protective sleeve; 101: high-voltage copper busbar;
20: low-voltage protective sleeve;
30: mounting bracket; 301: bracket body; 302: leg; 303: mounting platform; 3031: first mounting hole;
3032: second mounting hole;
40: sealing gasket; 401: first bolt hole; 402: second bolt hole;
50: rigid wiring harness; 501: rigid section; 502: flexible section; 503: fuse groove; 504: fuse strip;
505: telescoping section;
60: flexible wiring harness.

### DETAILED DESCRIPTION OF THE PREFERRED EMBODIMENTS.

Various exemplary embodiments of the present disclosure may now be described in detail with reference to the drawings. It should be noted that relative arrangements of components and steps, numerical expressions, and values set forth in these embodiments do not limit the scope of the present disclosure unless specifically stated otherwise.

The following description of at least one exemplary embodiment is illustrative only and in no way used as any limitation to the present disclosure and its applications or uses.

Technologies, methods, and devices known to those of ordinary skill in the related art may not be discussed in detail, but where appropriate, such technologies, methods, and devices should be considered as part of the specification.

In all examples illustrated and discussed herein, any specific value should be construed as merely exemplary and not as a limitation. Therefore, other examples of the exemplary embodiments may have different values.

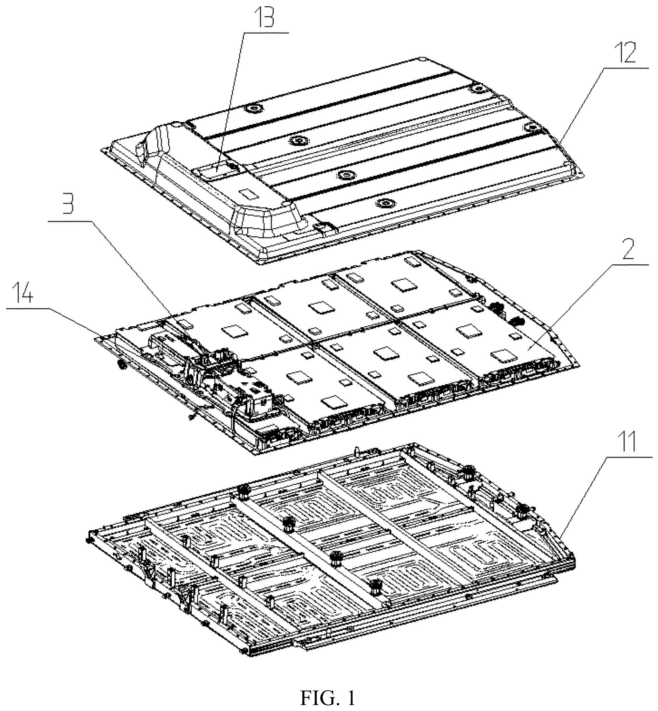

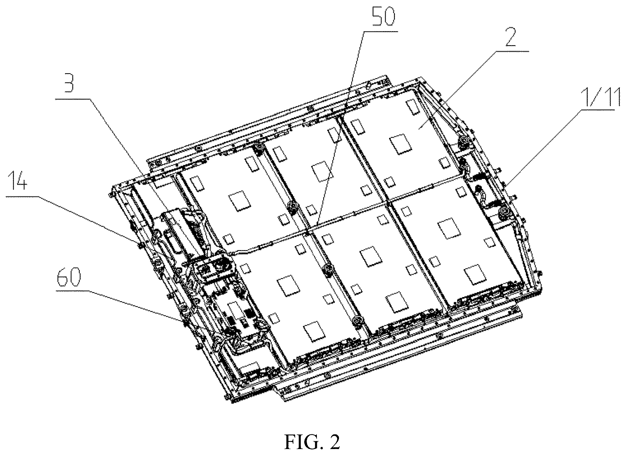

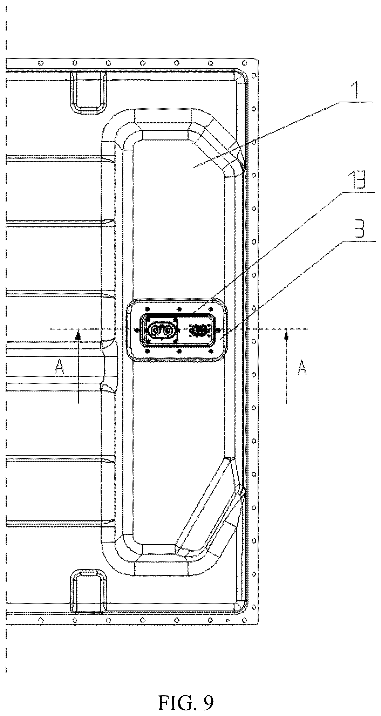

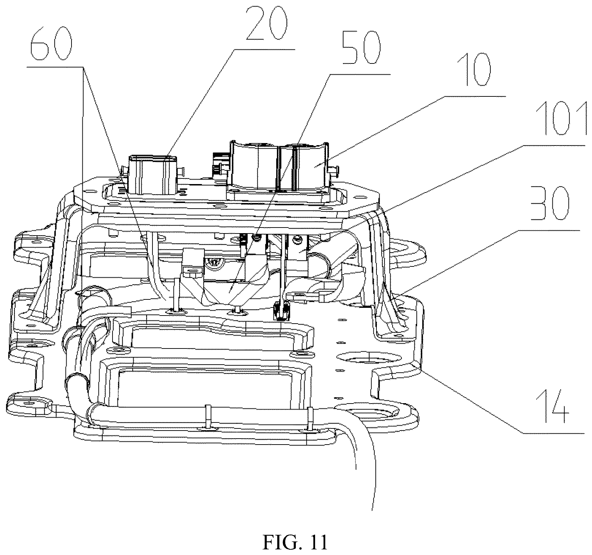

As illustrated in FIGS. 1, 2 and 9, a battery pack structure includes a housing 1, and a battery module 2 and a wiring harness assembly 3 which are disposed inside the housing 1, in which the housing 1 includes a lower housing 11 for accommodating the battery module 2 and a cover plate 12 covering the top of the lower housing 11. As illustrated in FIGS. 11 and 2, the wiring harness assembly 3 includes a flexible wiring harness 60, a flat rigid wiring harness 50, at least one high-voltage protective sleeve 10, at least one low-voltage protective sleeve 20, and a mounting bracket 30 for mounting the high-voltage protective sleeve 10 and the low-voltage protective sleeve 20 to the housing 1. Two ends of the rigid wiring harness 50 are electrically connected to the high-voltage protective sleeve 10 and the battery module 2, respectively, and two ends of the flexible wiring harness 60 are electrically connected to the low-voltage protective sleeve 20 and the battery module 2 respectively. The battery pack structure of the present disclosure can fix the high-voltage protective sleeve and the low-voltage protective sleeve through the mounting bracket 30, so as to realize the physical isolation between the high-voltage wiring harness and the low-voltage wiring harness. Meanwhile, the wiring harness assembly of the present disclosure includes a flexible wiring harness 60 connected to the low-voltage protective sleeve 20 and a flat rigid wiring harness 50 connected to the high-voltage protective sleeve 10, and the arrangement of the flat rigid wiring harness 50 realizes the transition of the high-voltage wiring harness from the external circular shape to the flat shape, and solves the problem that the high-voltage wiring harness is difficult to be bent and arranged inside the battery pack due to the excessive diameter.

The high-voltage protective sleeve 10 may be understood as a housing of a high-voltage connector, the low-voltage protective sleeve 20 may be understood as a housing of a low-voltage connector, both of which are common technical terms in the art.

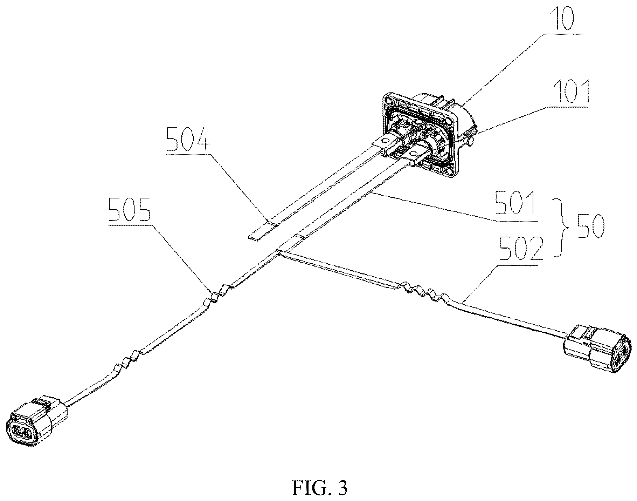

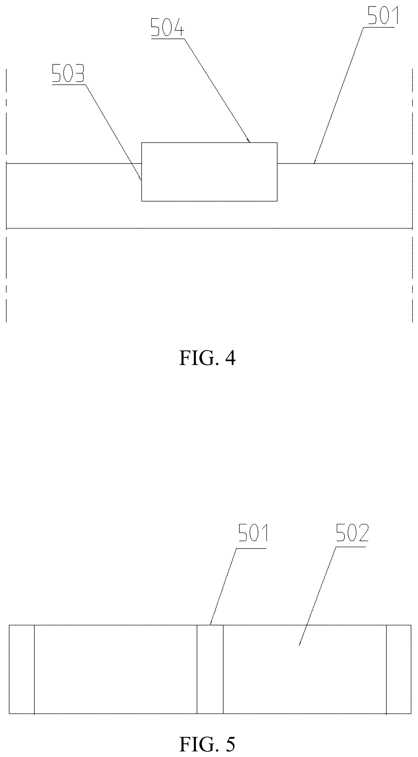

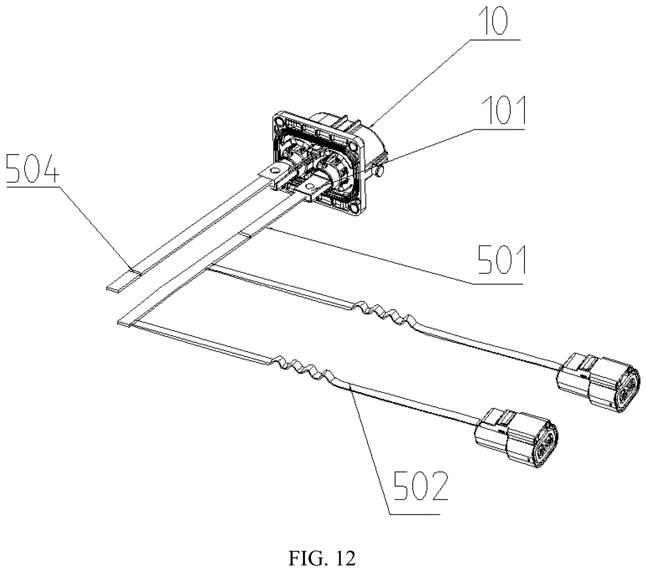

The rigid wiring harness 50 at least includes a flat rigid section 501, which may be implemented in the following ways:
(1) The entire body of the rigid wiring harness 50 (i.e., the whole rigid wiring harness 50) includes a flat rigid section 501, the rigid section 501 is specifically flat-shaped.
(2) The rigid wiring harness 50 includes a flat rigid section 501 and a flexible section 502 electrically connected to the rigid section 501, and both the rigid section 501 and the flexible section 502 are flat-shaped.
(3) The rigid wiring harness 50 includes a flat rigid section 501 and a plurality of flexible sections 502 electrically connected to the rigid section 501, both the rigid section 501 and the flexible section 502 are flat-shaped, and the plurality of flexible sections 502 are arranged independently of each other. Specifically, the plurality of flexible sections 502 are arranged sequentially along a width and/or thickness direction of the rigid section, or along a length and/or thickness direction of the rigid section 501. FIG. 5 illustrates a schematic diagram of a distribution of two flexible sections 502 sequentially arranged along a width direction of a rigid section 501, and FIG. 12 illustrates a schematic diagram of a distribution of two flexible sections 502 sequentially arranged along a length direction of a rigid section 501. The free ends of different flexible sections 502 may be directly connected to different modules of the battery module 2. Alternatively, the free ends may be provided with protective sleeves, and then connected to different modules of the battery module 2 through the protective sleeves to achieve the purpose of electrical energy transmission. Please refer to FIG. 3 for details.

In this embodiment, the rigid section 501 is exemplarily a flat aluminum bar, the flexible section 502 includes soft copper wires sheathed with an insulating sleeve, and different flexible sections 502 are insulated from each other. Compared with the existing circular high-voltage cable, the flat rigid wiring harness 50 avoids the problem that the high-voltage wiring harness is difficult to be bent and arranged due to the excessive diameter, and can effectively improve the volume energy density of the battery pack.

The rigid section 501 and the flexible section 502 are connected by welding, crimping, or bolting with a bolt structure. In general, considering the aesthetics and the integrity, the wiring harness is integrally welded exemplarily using a welding method such as friction stir welding or ultrasonic welding.

In an embodiment, as illustrated in FIG. 3, the rigid section 501 is provided with at least one fuse groove 503 along a width direction at an end electrically connected to the flexible section 502, and a fuse strip 504 is embedded in the fuse groove 503. Both the rigid section 501 and the fuse strip 504 are made of metal materials, and a melting point of the fuse strip 504 is lower than that of the rigid section 501. During the use of the battery pack structure, when the temperature rises sharply due to abnormal conditions such as short circuit, the fuse strip 504 may dissolve (i.e. melt) before the rigid section 501 and other parts, and then form an alloy structure with a lower melting point with the rigid section 501. As the temperature continues to rise, the rigid section 501 may break at the fuse strip 504, forming an open circuit and achieving power-off, so as to effectively protect the battery pack and prevent the battery pack from spontaneous combustion due to a rapid temperature rise.

Furthermore, in order to ensure the overall strength of the rigid section 501, the fuse strip 504 is cast in the fuse groove 503, and a ratio of the depth of the fuse groove 503 to the thickness of the rigid section 501 is not greater than 1/2. Please refer to FIG. 4 for details.

In order to achieve the optimal use effect, the top of the fuse strip 504 is disposed to protrude from an end surface of the rigid section 501. Since the depth and the width of the fuse groove 503 are generally designed to be small to ensure the strength of the rigid section 501, it is necessary to increase the metal content of the fuse strip 504 as much as possible to ensure that when the temperature rises, the fuse strip 504 can fully form an alloy structure with a lower melting point with the rigid section 501 and fuse immediately. Therefore, the top of the fuse strip 504 may be disposed to protrude from the end surface of the rigid section 501. In addition, since the fuse strip 504 is disposed to protrude, it is possible to assess the usage status of the fuse strip 504 according to the change of the end surface thereof (i.e, the flatness of the end surface), so as to assess the daily operating conditions of the battery pack. For example, when the flatness of the end surface of the fuse strip 504 is poor, it indicates that the fuse strip 504 has experienced one or more short-circuit incidents, and the flatness of the end surface of the fuse strip 504 is proportional to the number of short-circuit incidents having been experienced. Thus, by observing the flatness of the end surface of the fuse strip 504, the maintenance personnel or users can be reminded to make a preliminary judgment on the fault status of the battery pack structure.

In an embodiment, as illustrated in FIG. 3, the flexible section 502 has at least one telescoping section 505, which is overall serrated or wavy in form and is formed by bending the flexible section 502 along a first direction perpendicular to a plane where the flexible section 502 is located. After long-term charging and discharging of the battery pack structure, deformation such as bulging may inevitably occur. However, generally there is no reserved length when the existing wiring harness is connected to the battery module 2. Therefore, when the battery pack structure is deformed, the telescoping section 505 can be stretched to some extent to avoid undesired situations such as poor contact, thereby significantly prolonging the service life of the battery pack structure.

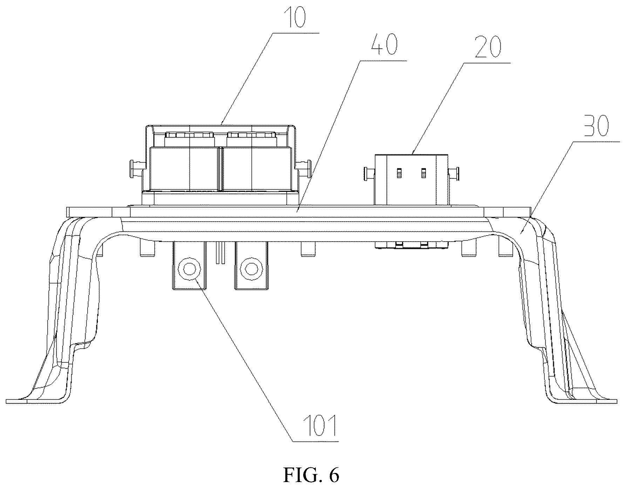

In an embodiment, as illustrated in FIGS. 6 to 8, the mounting bracket 30 includes a plate-shaped bracket body 301 and at least one leg 302 that is fixedly connected to the bracket body 301 to allow the bracket body 301 to be suspended. The high-voltage protective sleeve 10 and the low-voltage protective sleeve 20 are mounted on the bracket body 301. Terminals of the high-voltage protective sleeve 10 and the low-voltage protective sleeve 20 are located on a side where the leg 302 is located, and connected to the rigid wiring harness 50 and the flexible wiring harness 60, respectively. When being wired and connected to the mating protective sleeve , the high-voltage protective sleeve 10 and the low-voltage protective sleeve 20 adopt a straight-up and straight-down connection mode, which facilitates the plugging and unplugging of the protective sleeves . The terminal of the high-voltage protective sleeve 10 may be formed with a high-voltage copper busbar 101, which connects the flat rigid wiring harness 50 to replace the existing circular high-voltage wiring harness, thereby achieving the transition of the high-voltage wiring harness from a circular shape to a flat shape, and solving the problem that the high-voltage wiring harness is difficult to be bent and arranged inside the battery pack due to the excessive diameter.

There are two of the legs 302, which are formed by bending two ends of the bracket body 301 in an extending direction toward a same direction. The two legs 302 and the bracket body 301 are of an integrated stamping structure, which facilitates mass production and manufacturing.

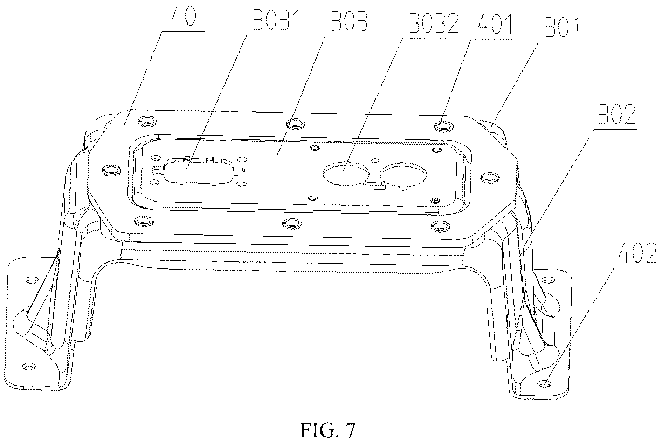

As illustrated in FIG. 7, the end surface of the bracket body 301 on a side away from the legs 302 is provided with a mounting platform 303 that protrudes from the end surface of the bracket body. The mounting platform 303 is provided with a first mounting hole 3031 for mounting the high-voltage protective sleeve 10 and a second mounting hole 3032 for mounting the low-voltage protective sleeve 20 at intervals.

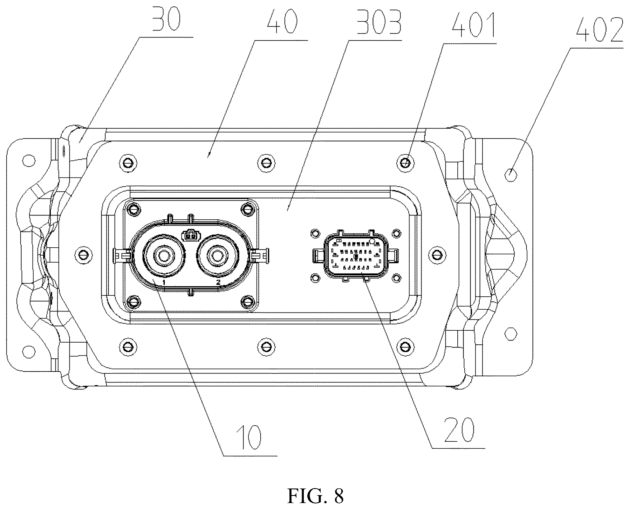

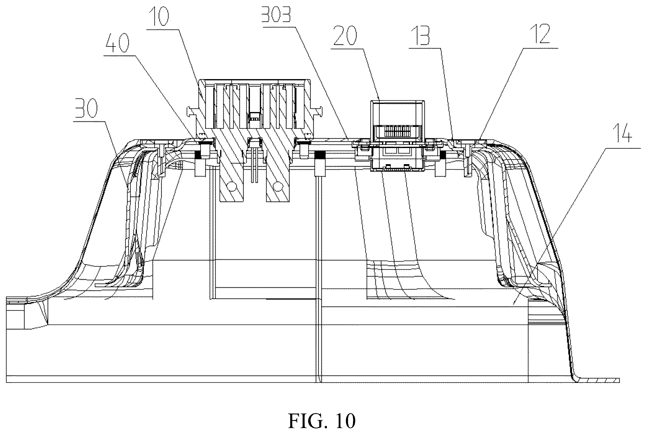

Furthermore, as mentioned above, the housing 1 includes a lower housing 11 for accommodating the battery module 2 and a cover plate 12 covering the top of the lower housing 11. As illustrated in FIGS. 1, 9 and 10, the cover plate 12 is provided with a guide hole 13 for the mounting platform 303 to extend through. A base bracket 14 for supporting the wiring harness assembly 3 is disposed inside the housing 1. As illustrated in FIGS. 7 and 8, the leg 302 and the base bracket 14 are correspondingly provided with second bolt holes 402, and the legs 302 and the base bracket 14 are connected by bolts. The base bracket 14 provides secondary fixation for the wiring harness assembly 3, thereby preventing the wiring harness assembly 3 from shaking or falling off during use, which would otherwise lead to poor contact.

Since the mounting platform 303, and the high-voltage protective sleeve 10 and the low-voltage protective sleeve 20 mounted on the mounting platform 303, extend to the outside of the battery pack structure, effective sealing at the guide hole 13 is required to ensure good waterproof performance of the battery pack structure. As illustrated in FIGS. 7 and 8, a sealing gasket 40 is disposed around the mounting platform 303 in this embodiment. The sealing gasket 40, the bracket body 301 and the cover plate 12 are correspondingly provided with first bolt holes 401 for mounting the bracket body 301 to the battery pack structure.

In order to achieve the optimal sealing effect, a top surface of the sealing gasket 40 is not higher than an upper end surface of the mounting platform 303. When the wiring harness assembly 3 is mounted on the cover plate 12 of the battery pack structure, the mounting platform 303 extends out from the guide hole 13, and the sealing gasket 40 abuts against the cover plate 12 of the battery pack structure to achieve effective sealing. Here, in a case where the top surface of the sealing gasket 40 is higher than the upper end surface of the mounting platform 303, when spilling onto the mounting platform 303, external liquid may accumulate thereon if it cannot be drained away in time. Long-term accumulation of the external liquid may inevitably cause the liquid to enter the battery pack structure, thereby damaging the electrical system inside the battery pack structure.

Although some specific embodiments of the present disclosure have been described in detail through examples, those skilled in the art should understand that the above examples are only for illustration and are not intended to limit the scope of the present disclosure. It should be understood by those skilled in the art that the above embodiments can be modified without departing from the scope and the spirit of the present disclosure, and the scope of the present disclosure is defined by the appended claims.

## Claims

1. A battery pack structure, comprising a housing, and a battery module and a wiring harness assembly which are disposed in the housing, wherein the wiring harness assembly comprises a flexible wiring harness, a flat rigid wiring harness, at least one high-voltage protective sleeve, at least one low-voltage protective sleeve, and a mounting bracket for mounting the high-voltage protective sleeve and the low-voltage protective sleeve to the housing; two ends of the rigid wiring harness are electrically connected to the high-voltage protective sleeve and the battery module, respectively; and two ends of the flexible wiring harness are electrically connected to the low-voltage protective sleeve and the battery module, respectively.

2. The battery pack structure according to claim 1, wherein the rigid wiring harness at least comprises a flat rigid section.

3. The battery pack structure according to claim 2, wherein the rigid wiring harness comprises a flat rigid section and at least one flexible section electrically connected to the rigid section; and
when a plurality of the flexible sections are provided, the flexible sections are arranged independently of each other.

4. The battery pack structure according to claim 3, wherein a plurality of the flexible sections are sequentially arranged along a width and/or thickness direction of the rigid section.

5. The battery pack structure according to claim 3, wherein a plurality of the flexible sections are sequentially arranged along a length and/or thickness direction of the rigid section.

6. The battery pack structure according to claim 3, wherein the rigid section is a flat aluminum busbar, the flexible section comprises flexible copper wires sheathed with an insulating sleeve, and different flexible sections are insulated from each other.

7. The battery pack structure according to claim 3, wherein the rigid section and the flexible section are connected by welding, crimping, or bolting with a bolt structure.

8. The battery pack structure according to claim 7, wherein the rigid section and the flexible section are welded by friction stir welding or ultrasonic welding.

9. The battery pack structure according to claim 3, wherein the rigid section is provided with at least one fuse groove along a width direction at an end electrically connected to the flexible section, a fuse strip is embedded in the fuse groove, both the rigid section and the fuse strip are made of metal materials, and a melting point of the fuse strip is lower than that of the rigid section.

10. The battery pack structure according to claim 9, wherein the fuse strip is cast in the fuse groove, and a ratio of a depth of the fuse groove to a thickness of the rigid section is not greater than 1/2.

11. The battery pack structure according to claim 10, wherein the top of the fuse strip is disposed to protrude from an end surface of the rigid section.

12. The battery pack structure according to claim 3, wherein the flexible section is provided with at least one telescoping section, which is formed by bending the flexible section along a first direction perpendicular to a plane where the flexible section is located.

13. The battery pack structure according to claim 12, wherein the telescoping section is overall serrated or wavy in form.

14. The battery pack structure according to claim 1, wherein the mounting bracket comprises a plate-shaped bracket body and at least one leg that is fixedly connected to the bracket body to allow the bracket body to be suspended; the high-voltage protective sleeve and the low-voltage protective sleeve are mounted on the bracket body; and terminals of the high-voltage protective sleeve and the low-voltage protective sleeve are located on a side where the leg is located, and connected to the rigid wiring harness and the flexible wiring harness, respectively.

15. The battery pack structure according to claim 14, wherein there are two of the legs, which are formed by bending two ends of the bracket body in an extending direction toward a same direction.

16. The battery pack structure according to claim 14, wherein an end surface of the bracket body on a side away from the leg is provided with a mounting platform, which is disposed to protrude from the end surface of the bracket body; and the mounting platform is provided with a first mounting hole for mounting the high-voltage protective sleeve and a second mounting hole for mounting the low-voltage protective sleeve at intervals.

17. The battery pack structure according to claim 16, wherein a sealing gasket is disposed around the mounting platform; and
the sealing gasket, the bracket body and the housing are correspondingly provided with first bolt holes.

18. The battery pack structure according to claim 17, wherein a top surface of the sealing gasket is not higher than an upper end surface of the mounting platform.

19. The battery pack structure according to claim 16, wherein the housing comprises a lower housing for accommodating the battery module and a cover plate covering the top of the lower housing; and the cover plate is provided with a guide hole for the mounting platform to extend through.

20. The battery pack structure according to claim 19, wherein a base bracket for supporting the wiring harness assembly is disposed inside the housing; and the leg and the base bracket are correspondingly provided with second bolt holes.
